# FASCICULE DE BREVET EUROPEEN

(11) **EP 0 837 396 B1**
(45) Date de publication et mention de la délivrance du brevet: **10.09.2003**
(21) Numéro de dépôt: 97402348.3
(22) Date de dépôt: 06.10.1997
(51) Int. Cl.: G06F 13/16

(54) **Opération atomique sur mémoire distante et dispositif permettant d'effectuer cette opération**
Atomare Operation in Fernspeicher und Vorrichtung zur Durchführung der Operation
Atomic operation on a remote memory and device for performing this operation

(30) Priorité: 18.10.1996 FR 9612719
(43) Date de publication de la demande: 22.04.1998
(73) Titulaire: BULL S.A., 78430 Louveciennes (FR)
(72) Inventeur: Autechaud, Jean-François, 75004 Paris (FR); Dionet, Christophe, 94200 Ivry-sur-Seine (FR)

(56) Documents cités:
- EP-A- 0 240 616
- EP-A- 0 580 961
- EP-A- 0 629 948
- US-A- 5 325 487

## Description

Le domaine d'application de l'invention est celui du partage d'une unité de mémoire étendue par plusieurs systèmes informatiques, l'unité de mémoire étendue et les systèmes informatiques étant distants l'un de l'autre.

Pour faire communiquer entre eux deux ou plusieurs systèmes distants, on peut prévoir des liaisons entre chacun de ces systèmes, au moyen desquelles sont échangés des messages.

Une autre possibilité consiste à partager les ressources d'une ou plusieurs unités de mémoire étendue entre les systèmes distants. L'accès par deux ou plusieurs systèmes à des ressources commune d'une unité de mémoire étendue, permet à ces systèmes de communiquer entre eux.

Cependant, pour assurer la cohérence de données de l'unité de mémoire étendue, susceptibles d'être traitées par différents système, il est nécessaire qu'un système ne vienne pas modifier ces données pendant qu'un autre système les traite. Pour cela, différents moyens connus sont utilisés tels que la mise d'un verrou sur un bloc de données accédées par un système pour interdire l'accès à ce bloc de données aux autres systèmes jusqu'à libération du verrou, ou encore l'incrémentation d'un pointeur sur une zone de l'unité de mémoire étendue pour réserver l'accès à cette zone par un système en laissant l'accès libre aux zones suivantes pour d'autres système. Il est alors nécessaire qu'entre la prise d'un verrou ou l'incrémentation d'un pointeur par un système, et la réservation effective de ce verrou ou de la zone mémoire pointée, un autre système ne vienne pas prendre ce verrou ou incrémenter différemment le pointeur à partir d'une même valeur. Or, la prise d'un verrou ou l'incrémentation d'un pointeur nécessite un minimum de traitement, voir si le verrou est libre puis l'affecter à un système, lire un pointeur, l'incrémenter puis réécrire la nouvelle valeur du pointeur. Pour cela, on emploie habituellement des opérations atomiques. Une opération atomique est une opération logique indivisible, c'est à dire une opération dont l'exécution ne peut être perturbée par aucune autre opération logique. A titre d'exemple, on peut citer des opérations atomiques connues telles que "teste&positionne" ("test&set" en Anglais), "lit&efface" ("read&clear" en Anglais) ou "compare&remplace" ("compare&swap" en Anglais). Entre le début et la fin de son exécution, une opération atomique crée une section critique hors de laquelle l'opération doit s'être faite totalement ou ne s'être faite en rien.

Aujourd'hui, de nombreuses solutions existent pour répondre aux problèmes d'exécution d'opérations atomiques sur des éléments d'un système situés à proximité des unités de traitement qui commandent ces opérations. Il convient de reconnaître que la proximité d'éléments sur lesquels s'effectuent des opérations atomiques, et des unités de traitements permettent des temps d'accès courts et une immunité aux bruits qui amoindrissent les risques de perturbation. Les éventuelles perturbations peuvent être traitées par des moyens matériels relativement simples intervenant sur de faibles distances.

Cependant, une distance non négligeable entre un système et des éléments extérieurs à ce système sur lesquels exécuter une opération atomique commandée par une unité de traitement de ce système pose des problèmes spécifiques. Le temps de transfert d'une commande et de son retour entre le système et l'élément peut être suffisant pour qu'une modification de l'état de cet élément par un autre système se soit produite entre l'envoi de cette commande et son effet sur l'élément distant. Si une erreur s'est produite pendant l'exécution de l'opération atomique, il faut s'assurer que l'opération ne se soit pas faite partiellement en laissant subsister une modification incomplète de l'élément distant. Par exemple, il ne faut pas qu'un verrou soit pris et que le système ayant commandé la prise de ce verrou au moyen d'une opération atomique ne le sache pas. Or, des erreurs de liaison peuvent résulter de l'éloignement de l'élément subissant l'effet de l'opération atomique.

Il est connu dans l'art antérieur, par le document EP 0 240 616, une méthode pour tester et positionner des données dans un enregistrement sur disque par une opération atomique d'entrée-sortie. Cette méthode est mise en oeuvre avec un dispositif mémoire à accès direct doté d'une pluralité de registres. Une telle méthode permet de partager ce dispositif mémoire entre plusieurs systèmes informatiques distants, chacun des systèmes informatiques ayant la possibilité de se réserver une exclusivité momentanée d'accès à un dispositif mémoire au moyen d'une opération atomique. Cette méthode fonctionne bien pour la réalisation de type "teste&positionne" mais est moins adaptée à d'autres types d'opérations comme par exemple "compare&remplace".

Pour pallier les inconvénients précédemment cités, l'invention concerne une opération atomique commandée par un système informatique sur un premier registre situé dans une unité de mémoire distante, caractérisée en ce qu'elle est constituée de deux étapes suivies d'une troisième étape en fonction du résultat des deux premières étapes,
- la première étape consistant à charger dans un deuxième registre, à proximité du dit premier registre, une ancienne valeur du premier registre, telle que connue du dit système informatique;
- la deuxième étape consistant à comparer, à proximité du dit premier registre, l'ancienne valeur du premier registre à une valeur courante du dit premier registre et à remplacer, suivant le résultat de la comparaison, la dite valeur courante par une nouvelle valeur, communiquée par le système informatique;
- la troisième étape consistant à communiquer au système informatique la dite valeur courante du dit premier registre.

Il convient de remarquer que seules la première et la troisième étape sont soumises à des contraintes de communication. En effectuant la deuxième étape constituant une opération indivisible à proximité de l'élément à modifier, l'invention permet de réduire considérablement la section critique.

On peut prévoir de réserver deux registres dans l'unité de mémoire distante, spécialement réservés au système commandant l'opération. L'un des registres servant de deuxième registre pour y écrire l'ancienne valeur selon la première étape et l'autre registre pour y écrire la nouvelle valeur prise en compte dans la deuxième étape. Ceci nécessite un traitement dans la réservation des registres et l'existence d'une écriture registre dans l'unité de mémoire distante par le système commandant l'opération.

Pour optimiser l'accès à l'unité de mémoire distante, on peut préférer réaliser cet accès par blocs de données, la taille d'un bloc étant supérieure à celle d'un registre. Un contrôleur mémoire en communication avec le système informatique distant, exécute des lectures et des écritures par bloc de l'unité de mémoire à proximité de laquelle il est situé. Pour lire un registre contenu dans l'unité de mémoire distante, le système informatique lit le bloc complet contenant ce registre. Pour écrire dans un ou plusieurs registres contenus dans un bloc de l'unité de mémoire distante, le système informatique commande une écriture partielle d'un certain nombre de sous bloc(s) du bloc contenant ces registres. Pour exécuter cette commande, le contrôleur mémoire lit ledit bloc, y modifie le contenu des seuls sous blocs de l'écriture partielle en laissant les autres inchangés et réécrit la totalité du bloc dans l'unité mémoire.

Une variante intéressante de l'invention est caractérisée en ce que
- le deuxième registre est situé dans un contrôleur mémoire à proximité de l'unité de mémoire distante;
- ledit contrôleur mémoire comprenant un troisième registre dans lequel est écrit la valeur courante du premier registre suite à une commande d'écriture partielle du bloc de l'unité mémoire contenant ledit premier registre pour écrire la nouvelle valeur dans ledit premier registre.

Pour réaliser une opération "compare&remplace", une composante intéressante de l'invention est caractérisée en ce que la valeur courante est remplacée par la nouvelle valeur si et seulement si le résultat de la comparaison indique que l'ancienne valeur est égale à la valeur courante.

Pour réaliser une opération "teste&positionne" ou une opération "lit&efface", une composante intéressante de l'invention est caractérisée en ce que la valeur courante est remplacée par la nouvelle valeur quel que soit le résultat de la comparaison et que les deux premières étapes sont toujours suivies de la troisième étape.

Pour effectuer des opérations atomiques, l'invention concerne aussi un dispositif de contrôleur mémoire comprenant une pile dont au moins une entrée est reliée à un bus de réception de données en provenance d'une unité mémoire et à un bus de réception de données en provenance d'un système informatique distant au moyen d'un premier multiplexeur et dont au moins une sortie est reliée à un bus d'émission de données vers ladite unité mémoire au moyen d'un premier circuit de logique combinatoire, caractérisé en ce qu'il comprend:
- un registre dont l'entrée est reliée au bus de réception de données en provenance de l'unité mémoire et dont la sortie est reliée à un bus d'émission de données vers le système informatique distant au moyen d'un deuxième multiplexeur;
- un circuit de logique combinatoire pour invalider l'écriture d'au moins une entrée de la pile et pour aiguiller les données destinées à cette entrée vers ledit registre;
- un registre dont une entrée est reliée au bus;
- un comparateur dont une entrée est reliée à une sortie du registre et une autre entrée est reliée à une sortie du registre, la sortie de ce comparateur commandant au moins une sortie de la pile.

Il est intéressant d'utiliser l'invention pour faire communiquer entre eux plusieurs systèmes informatiques distants au moyen d'une unité mémoire partagée entre ces systèmes distants. Chaque système informatique a la possibilité de se réserver une exclusivité momentanée d'accès à l'unité mémoire au moyen d'opérations atomiques. On utilise particulièrement une opération atomique qui consiste à remplacer une valeur courante d'un premier registre dans l'unité mémoire par une nouvelle valeur communiquée par le système informatique distant de l'unité mémoire, sachant que le système informatique distant connaît une ancienne valeur du registre non nécessairement égale à sa valeur courante. Un dispositif est mis en place dans un contrôleur mémoire pour exécuter l'opération atomique à proximité de l'unité mémoire. Une écriture de la valeur courante du premier registre est réalisée dans un registre du contrôleur mémoire suite à une commande d'écriture partielle du bloc de l'unité mémoire contenant ledit premier registre. L'invention sera mieux comprise à l'aide de la description qui suit en référence aux figures.
La figure 1 représente deux systèmes informatiques communiquant au moyen d'une unité de mémoire étendue commune.
La figure 2 représente un exemple de coupleur pour faire communiquer deux systèmes informatiques.
La figure 3 représente un exemple de circuit dans lequel il est possible d'intégrer le dispositif de l'invention.
La figure 4 représente un dispositif permettant de faire une écriture partielle.
La figure 5 représente un dispositif conforme à l'invention.

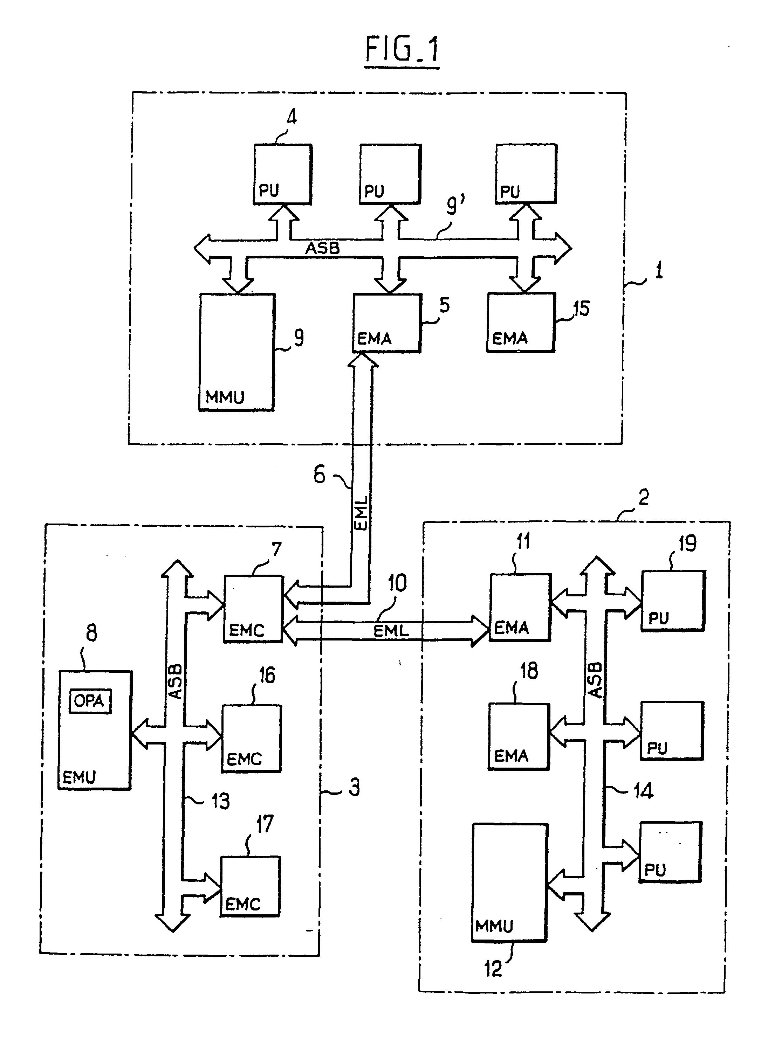

Sur la figure 1, un calculateur 1 comprend une unité de mémoire principale MMU 9 à laquelle accède au moins une unité processeur PU 4 au moyen d'un bus système ASB 9'. Sur le bus ASB 9' sont raccordées une ou plusieurs interfaces EMA d'accès à mémoire étendue. L'interface EMA 5 est reliée à un contrôleur de mémoire étendue EMC 7 situé dans un cabinet 3 distant du calculateur 1, au moyen d'une liaison EML 6. Une liaison EML peut être une liaison série ou une liaison parallèle permettant un transfert d'informations à débit élevé. Le cabinet 3 comprend une unité de mémoire étendue EMU 8 à laquelle accède le contrôleur de mémoire étendue 7 au moyen d'un bus système ASB 13. D'autres contrôleurs EMC 16, 17, sans que la quantité représentée sur la figure ne soit limitative peuvent être prévus pour accéder également à l'unité de mémoire étendue EMU 8 au moyen du bus système 13. Le contrôleur 16 permet par exemple d'échanger des données avec un autre calculateur non représenté, selon le même schéma que pour le calculateur 1. Il est possible de prévoir que le contrôleur de mémoire étendue EMC 7 soit également relié à une interface 11 d'un calculateur 2 au moyen d'une liaison EML 10. Comme le calculateur 1, le calculateur 2 comprend au moins une unité processeur PU 19 et une unité de mémoire principale MMU 12 à laquelle accède l'interface 11 au moyen d'un bus système ASB 14. Une autre interface EMA 18, sans que la quantité d'interfaces représentées sur la figure ne soit limitative peut être prévue pour accéder également à l'unité de mémoire principale MMU 12 au moyen du bus système 14. Un premier port de l'interface 18 permet par exemple d'échanger des données avec un autre cabinet non représenté, selon le même schéma que pour le cabinet 3. Les calculateurs 1 et 2 constituent des systèmes distants de l'unité de mémoire étendue EMU 8.

Le calculateur 1 de la figure 1 présente une deuxième interface EMA 15, reliée elle aussi au bus système 9'. En reliant un premier port de l'interface EMA 15 à un premier port du contrôleur EMC 17 et un deuxième port de l'interface 18 à un deuxième port du contrôleur EMC 17, au moyen de liaisons EML non représentées par souci de clarté de la figure, il est possible d'obtenir une redondance des connexions des calculateurs 1 et 2 avec le cabinet 3. Le deuxième port de l'interface 15 est alors disponible pour échanger des données avec un autre cabinet non représenté et contenant une unité de mémoire étendue.

Les unités de mémoire étendue EMU 8 et 12 sont subdivisées chacune en 2^{j} pages dont les adresses sont codées sur j bits. Chaque page est à son tour subdivisée en 2^{k} blocs de données dont les adresses sont codées sur k bits. La largeur du chemin de données de l'interface EMA 5 au contrôleur EMC 7 par la liaison EML 6 est de 2^{m} multiplets. Un multiplet est par exemple un octet ou un nonet. Ainsi 2^{m} multiplets constituent un sous bloc d'un bloc de données. Chaque bloc de données contient 2ⁿ sous blocs, adressables sur n bits à l'intérieur d'un bloc.

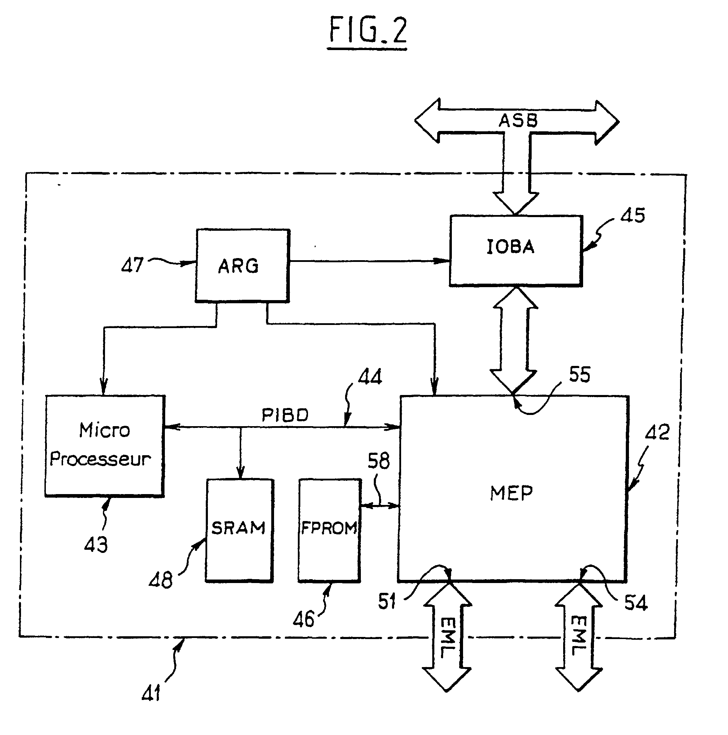

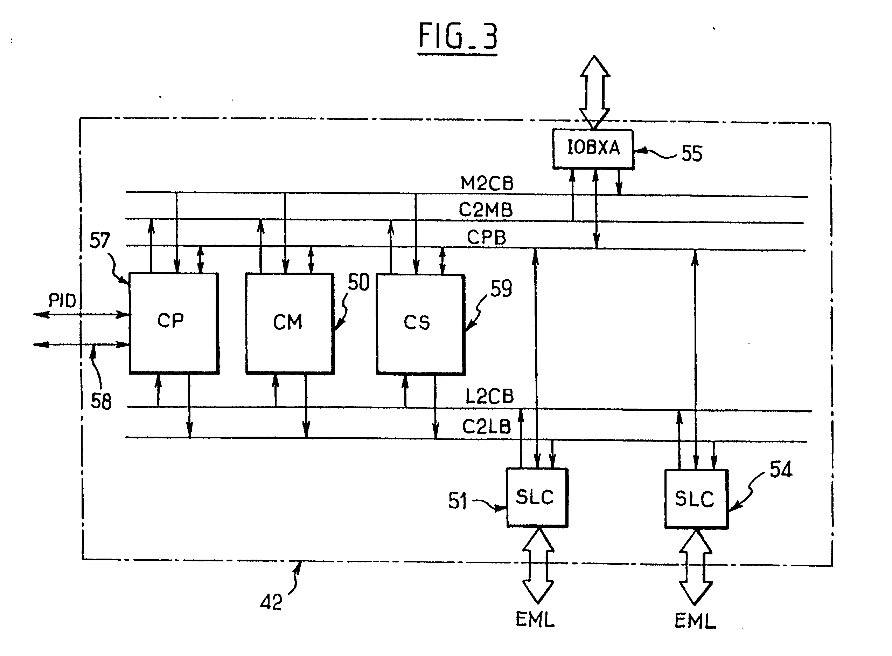

Une interface EMA ou un contrôleur mémoire EMC est réalisé au moyen d'un circuit 41 présenté plus en détail sur la figure 2. Le circuit 41 comprend essentiellement un circuit intégré MEP 42 détaillé à l'aide de la figure 3, synchronisé par un générateur d'horloge ARG 47 et piloté par un microprocesseur 43. Une mémoire permanente FPROM 46 contient un micro logiciel pour faire fonctionner le circuit intégré 42. Une mémoire à accès aléatoire SRAM 48 est prévue pour contenir les données qualifiant les transbordements pris en charge par le circuit 41. A l'initialisation du circuit 41, le circuit intégré 42 charge dans la mémoire 48, le micro logiciel contenu dans la mémoire 46. Pour ce faire, le circuit 42 accède directement à la mémoire 46 au moyen d'une liaison 58. La mémoire 46 garantit essentiellement la permanence des informations à l'initialisation alors que la mémoire 48 garantit les performances d'accès en fonctionnement. Si les standards de lecture écriture dans les mémoires 46 et 48 sont différents, par exemple sur un multiplet dans la mémoire 46 et sur huit multiplets dans la mémoire 48, le circuit intégré 42 fait les regroupements de multiplets nécessaires et génère les contrôles de parité adéquats. Un circuit d'adaptation bus IOBA 45 permet d'adapter le circuit 41 au bus système ASB pour le transfert de données entre le bus ASB et le circuit intégré 42. Le circuit 45 et le microprocesseur 43 sont synchronisés par le générateur d'horloge 47. Le microprocesseur 43 échange et traite les données de la mémoire 48 et du circuit 42 au moyen d'un bus PIBD 44 et du micro logiciel contenu dans la mémoire 48. Le circuit 42 comprend un port d'entrée sortie 55 en liaison avec le circuit d'adaptation 45 et deux ports d'entrée sortie 51 et 54 raccordés par liaison EML à un circuit distant identique au circuit 41. Un circuit 41 fonctionnant en EMA est raccordé à un circuit 41 fonctionnant en EMC. La largeur de chemin de données est identique sur les ports 51, 54 et 55 et égale à 2^{m} multiplets. L'intérêt de l'adaptateur 45 est de pouvoir supporter une adressabilité différente d'une adressabilité standard sur les ports 51, 54 et 55. Par exemple, l'adressage sur les ports 51, 54 et 55 peut se faire sur 40 bits alors que l'adressage de l'unité de mémoire principale MMU peut se faire sur 32 bits.

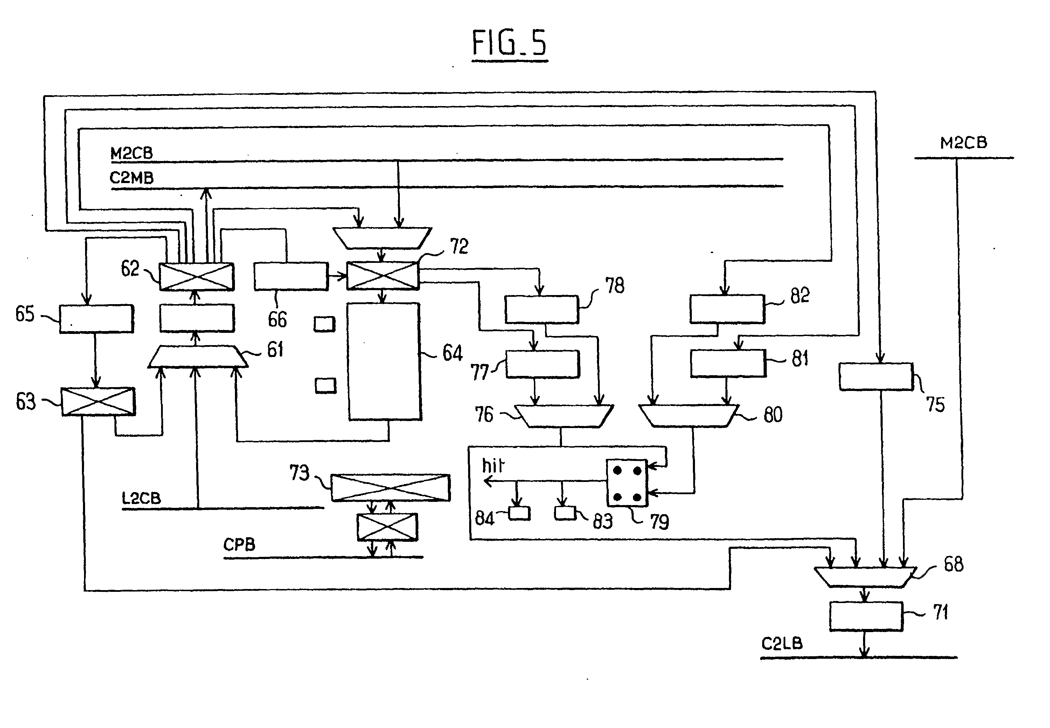

Dans le cadre de l'invention, le microprocesseur 43 n'est pas indispensable au fonctionnement en EMC du circuit 41, dans la mesure où les fonctions exécutées le sont de façon matérielle comme nous le verrons en référence à la figure 5.

La figure 3 présente l'architecture du circuit intégré 42. Un corps processeur CP 57 permet l'échange de données pour qualifier un transbordement avec le microprocesseur 43 au moyen du bus PIBD. Le corps processeur 57 est directement relié à la mémoire 46 par la liaison 58, pour charger à l'initialisation dans la mémoire 48, le micro logiciel contenu de façon permanente dans la mémoire 46. Un corps transbordeur CM 50 est activé par le corps processeur 57 dans le cas où le circuit intégré 42 est monté sur un circuit 41 qui occupe la place d'une interface EMA. Un corps contrôleur CS 59 est activé par le corps processeur 57 dans le cas où le circuit intégré 42 est monté sur un circuit 41 qui occupe la place d'un contrôleur EMC.

Pour se dispenser du microprocesseur 43, on peut prévoir d'activer le corps contrôleur CS 59 de façon purement matérielle, par exemple au moyen d'un cavalier ou d'un interrupteur disposé sur le circuit 41. En fonctionnement EMC, le corps transbordeur CM 50 et le corps processeur 57 ne figurent alors que pour des facilités de production du circuit intégré 42, identique pour un fonctionnement EMA et EMC. Ce qui permet l'interchangeabilité de circuits 42 sur une carte 5 ou une carte 7. Le fonctionnement qui nous intéresse dans le cadre de l'invention est celui en mode EMC.

Par le port 55 passent les données échangées avec la mémoire localisée dans le même cabinet que celui dans lequel le circuit 41 est monté. Si le circuit 41 est monté dans le calculateur 1, la mémoire locale est l'unité de mémoire principale MMU. Si le circuit 41 est monté dans le cabinet 3, la mémoire locale est l'unité de mémoire étendue EMU. Un bus M2CB transfert les données du port 55 vers le corps processeur 57, vers le corps transbordeur CM 50 ou vers le corps contrôleur CS 59. Un bus C2MB transfert les données du corps processeur 57, du corps transbordeur CM 50 ou du corps contrôleur CS 59 vers le port 55. Par les ports 51 et 54 passent les données échangées avec les mémoires distantes. Si le circuit 41 est monté dans un calculateur 1 ou 2, la mémoire distante est l'unité de mémoire étendue EMU du cabinet 3. Si le circuit 41 est monté dans le cabinet 3, la mémoire distante est l'unité de mémoire principale MMU d'un calculateur 1 ou 2. Un bus L2CB transfert les données du port 51, 54 vers le corps processeur 57, vers le corps transbordeur CM 50 ou vers le corps contrôleur CS 59. Un bus C2LB transfert les données du corps processeur 57, du corps transbordeur CM 50 ou du corps contrôleur CS 59 vers le port 51, 54. Un bus CPB bidirectionnel permet au corps processeur 57 d'échanger des données avec les ports 51, 54, 55, avec le corps transbordeur 50 ou avec le corps contrôleur 59.

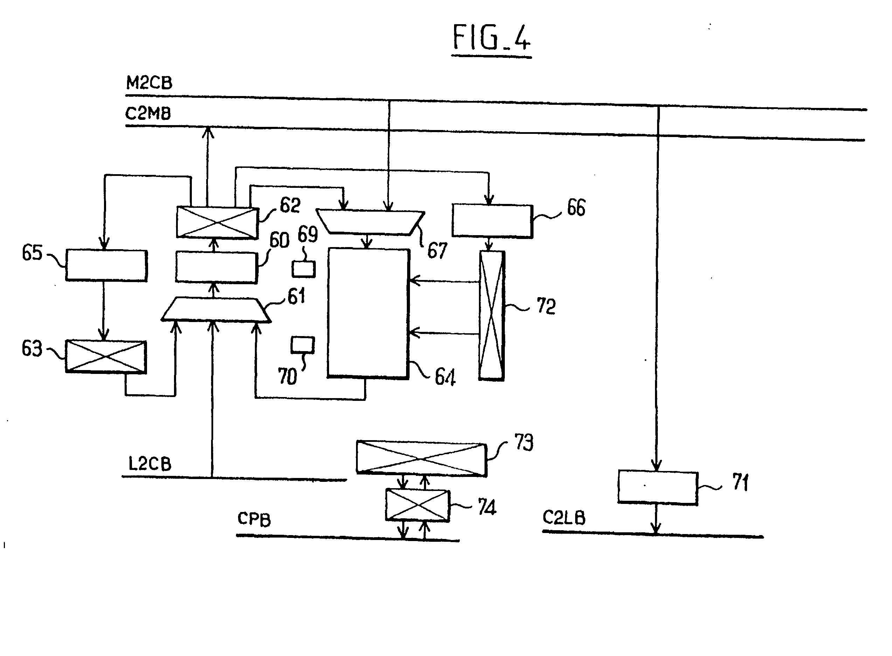

La figure 4 représente l'architecture du contrôleur mémoire CS 59 pour faire des lectures R2^{n+m}B, des écritures W2^{n+m}B par blocs de 2^{n+m} multiplets et des écritures partielles PW2^{n+m}B d'un nombre entier de sous blocs de 2^{m} multiplets à l'intérieur d'un bloc, dans l'unité de mémoire étendue EMU.

Un registre 60, de dimension égale à la largeur du chemin de données, possède une entrée reliée à la sortie d'un multiplexeur 61 et une sortie reliée à l'entrée d'un circuit de logique combinatoire 62. Le multiplexeur 61 possède une première entrée reliée au bus L2CB, une deuxième entrée reliée à une première sortie d'un circuit de logique combinatoire 63 et une troisième entrée reliée à la sortie d'une pile 64, prévue pour contenir 2ⁿ sous blocs de 2^{m} multiplets chacun. Le circuit de logique combinatoire 62 possède une première sortie reliée à l'entrée d'un registre 65, de dimension égale à la taille des adresses dans l'unité de mémoire étendue EMU, une deuxième sortie reliée au bus C2MB, une troisième sortie reliée à l'entrée d'un registre 66 prévu pour contenir 2n bits de façon à pouvoir indicer deux sous blocs de la pile 64, et une quatrième sortie reliée à une première entrée d'un multiplexeur 67. Le circuit de logique combinatoire 63 possède une entrée reliée à une sortie du registre 65. La pile 64, de type PEPS (FIFO en Anglais) reçoit en entrée une sortie du multiplexeur 67 dans 2ⁿ registres, chacun de taille égale à la largeur du chemin de données, au moyen d'un pointeur d'entrée 69 et se vide au moyen d'un pointeur de sortie 70. Le multiplexeur 67 possède une deuxième entrée reliée au bus M2CB. Un registre 71 possède une entrée reliée au bus M2CB et une sortie reliée au bus C2LB. Un circuit câblé de logique combinatoire 72 reçoit en entrée deux valeurs codées chacune sur n bits, données par le registre 66. La première valeur indique l'emplacement à l'intérieur d'un bloc de la pile 64, d'un sous bloc à partir duquel invalider l'écriture au moyen du circuit 72. La deuxième valeur indique l'emplacement suivant à l'intérieur d'un bloc de la pile 64, d'un sous bloc à partir duquel revalider l'écriture au moyen du circuit 72.

Les entrées et les sorties des multiplexeurs 61 et 67 sont chacun de taille égale à la largeur du chemin de donnée, c'est à dire capables de faire passer un sous bloc de 2^{m} multiplets sur un cycle d'horloge. Le passage de données dans les différents éléments décrits se fait au moyen d'un séquenceur 73 dont les liaisons avec les divers éléments 60 à 72 ne sont pas représentés pour ne pas surcharger inutilement la figure. Le séquenceur 73 est relié à un dispositif de verrouillage 74 lui-même relié par des liaisons directes aux dispositifs 74 identiques des contrôleurs CS de tous les circuits EMC 7, 16, 17 d'une même unité de mémoire étendue EMU. Le dispositif de verrouillage 74 évite que plusieurs circuits EMC accèdent simultanément à l'unité de mémoire étendue EMU en ne permettant qu'à un seul séquenceur 73 de fonctionner à la fois. Pour obtenir une répartition équitable d'accès par plusieurs contrôleurs CS de différents circuits EMC, le dispositif de verrouillage 74 respecte par exemple une priorité d'accès de type circulaire à l'unité mémoire (8). C'est à dire que l'accès à l'unité mémoire d'un contrôleur CS lui donne la plus faible priorité pour un accès suivant.

Le contrôleur mémoire CS dont nous venons de décrire la structure permet de faire des lectures R2^{n+m}B, des écritures W2^{n+m}B par blocs de 2^{n+m} multiplets et des écritures partielles PW2^{n+m}B d'un nombre entier de sous blocs de 2^{m} multiplets à l'intérieur d'un bloc, dans l'unité de mémoire étendue EMU de la façon que nous décrivons maintenant.

Une lecture R2^{n+m}B s'effectue de la façon suivante. Un message de requête en lecture envoyé par un système distant 1, 2, arrive sur la première entrée du multiplexeur 61 par le bus L2CB, sur un premier cycle d'horloge. Sur un deuxième cycle d'horloge, le message de requête en lecture est transféré dans le registre 60. Si le message de requête en lecture est codé sur un seul sous bloc, la première entrée du multiplexeur 61 est alors disponible pour recevoir un autre message du bus L2CB. Sur un troisième cycle d'horloge, le message de requête en lecture est transféré sur le bus C2MB au moyen du circuit de logique combinatoire 62, à destination de l'unité de mémoire étendue EMU. L'unité de mémoire étendue EMU envoie un message de réponse sur le bus M2CB qui arrive sur l'entrée du registre 71 pour être transféré sur le bus C2LB. Le message de réponse est généralement constitué d'un sous bloc contenant l'entête du message suivi d'un bloc de données tel que les sous blocs passent à chaque cycle d'horloge du bus M2CB dans le registre 71, puis au cycle suivant, du registre 71 sur le bus C2LB.

Une écriture W2^{n+m}B s'effectue de la façon suivante. Un message de requête en écriture est généralement constitué d'un ou plusieurs sous blocs contenant l'entête du message suivi d'un bloc de données envoyés par un système distant 1, 2. Le premier sous bloc du message arrive sur la première entrée du multiplexeur 61 par le bus L2CB, sur un premier cycle d'horloge. Sur un deuxième cycle d'horloge, le premier sous bloc est transféré dans le registre 60. La première entrée du multiplexeur 61 est alors disponible pour recevoir le sous bloc suivant du bus L2CB. Sur un troisième cycle d'horloge, le premier sous bloc est transféré sur le bus C2MB au moyen du circuit de logique combinatoire 62, à destination de l'unité de mémoire étendue EMU. Le processus se répète pour tous les sous blocs jusqu'à épuisement des sous blocs d'un message. L'unité de mémoire étendue EMU envoie un message de réponse sur le bus M2CB qui arrive sur l'entrée du registre 71 pour être transféré sur le bus C2LB. Le message de réponse est généralement constitué d'un ou plusieurs sous blocs contenant un acquittement d'écriture, qui passent à chaque cycle d'horloge du bus M2CB sur l'entrée du registre 71, et de la sortie du registre 71 sur le bus C2LB au cycle suivant.

Une écriture partielle PW2^{n+m}B permet d'écrire une suite de sous blocs contigus à l'intérieur d'un bloc. Un message de requête en écriture partielle est généralement constitué d'un ou plusieurs sous blocs contenant l'entête du message suivi de sous blocs de données envoyés par un système distant 1, 2. Le premier sous bloc du message arrive sur la première entrée du multiplexeur 61 par le bus L2CB, sur un premier cycle d'horloge. Sur un deuxième cycle d'horloge, le premier sous bloc est transféré dans le registre 60. La première entrée du multiplexeur 61 est alors disponible pour recevoir le sous bloc suivant du bus L2CB. L'entête du message contient entre autres les emplacements du premier et du dernier sous bloc à l'intérieur d'un bloc, codés chacun sur n bits ainsi qu'une adresse du bloc sur lequel s'effectue l'écriture partielle dans l'unité de mémoire étendue EMU. En liaison avec le séquenceur 73, le circuit de logique combinatoire 62 aiguille les 2n bits codant les emplacements du premier et du dernier sous bloc vers le registre 66 et aiguille la dite adresse du bloc vers le registre 65. Le circuit de logique combinatoire 62 aiguille ensuite les sous blocs à écrire vers la pile 64 via la première entrée du multiplexeur 67 en initialisant le pointeur d'entrée 69 sur l'emplacement du premier sous bloc à l'intérieur du bloc. Après réception du dernier sous bloc à écrire détecté par le circuit de logique combinatoire 62, le circuit de logique combinatoire 63, déclenché par le séquenceur 73, élabore une requête en lecture R2^{n+m}B à partir du contenu du registre 65 qu'il transmet au registre 60 via la deuxième entrée du multiplexeur 61. Le circuit de logique combinatoire 62 aiguille alors le message de requête en lecture sur le bus C2MB à destination de l'unité de mémoire étendue EMU. Le pointeur d'entrée 69 est ré initialisé pour pointer sur la première entrée de la pile 64. Le bloc de donnée du message de réponse à la requête en lecture reçu de l'unité de mémoire étendue EMU par le bus M2CB arrive sur la deuxième entrée du multiplexeur 67 pour être transféré sous bloc par sous bloc dans la pile 64. Le pointeur d'entrée 69 s'incrémente à chaque arrivée d'un nouveau sous bloc jusqu'à l'écriture du bloc complet dans la pile 64. Cependant, le circuit câblé de logique combinatoire 72 ayant invalidé l'écriture des registres de la pile 64 dans lesquels avaient été écrits les sous blocs de l'écriture partielle, l'écriture du bloc reçu dans le message de réponse n'est effectif que pour les sous blocs autres que ceux de l'écriture partielle. La pile 64 contient ainsi un bloc de l'unité de mémoire étendue EMU dans lequel une suite de sous blocs contigus est remplacée par la suite de sous blocs contigus de l'écriture partielle PW2^{n+m}B. En liaison avec le séquenceur 73, le circuit de logique combinatoire 63 élabore une entête de requête en écriture W2^{n+m}B à partir du contenu du registre 65 qu'il charge dans le registre 60 via la deuxième entrée du multiplexeur 61. Le séquenceur 73 transfert ensuite le contenu de la pile 64, sous bloc par sous bloc au moyen du pointeur de sortie 70 incrémenté à partir du premier registre de la pile 64, vers le registre 60 via la troisième entrée du multiplexeur 61. Le circuit de logique combinatoire 62 transfert ainsi sur le bus C2MB un message de requête en écriture W2^{n+m}B constitué de l'entête élaborée par le circuit 63, suivie du bloc contenu dans la pile 64, à destination de l'unité de mémoire étendue EMU. Après écriture du bloc dans l'unité de mémoire étendue EMU, l'unité de mémoire étendue EMU envoie un message de réponse sur le bus M2CB qui arrive sur l'entrée du registre 71 pour être transféré sur le bus C2LB. Le message de réponse est généralement constitué d'un ou plusieurs sous blocs contenant un acquittement d'écriture, qui passent à chaque cycle d'horloge du bus M2CB sur l'entrée du registre 71, et de la sortie du registre 71 sur le bus C2LB au cycle suivant.

La figure 5 représente l'architecture du contrôleur mémoire CS 59 pour faire de plus des écritures registre W2^{m}B, des écritures partielles conditionnelles CPW2^{n+m}B d'un nombre entier de sous blocs de 2^{m} multiplets à l'intérieur d'un bloc et des lectures registre R2^{m}B, dans l'unité de mémoire étendue EMU.

Les explications pour les éléments communs à ceux de la figure 4 restent valables. Cependant, l'entrée du registre 71 n'est plus directement reliée au bus M2CB mais à une sortie d'un multiplexeur 68. Le multiplexeur 68 possède une première entrée reliée au bus M2CB, une deuxième entrée reliée à une sortie d'un registre 75, une troisième entrée reliée à la sortie d'un multiplexeur 76 et une quatrième entrée reliée à une deuxième sortie du circuit 63. Le registre 75 possède une entrée reliée à une cinquième sortie du circuit 62. Le multiplexeur 76 possède une première entrée reliée à la sortie d'un registre 77 et une deuxième entrée reliée à la sortie d'un registre 78. Les registres 77 et 78 possèdent une entrée commune avec la deuxième entrée du multiplexeur 67. Chaque registre 77, 78, est affecté aux opérations concernant les données échangées respectivement avec chacun des ports 51, 54, du circuit 42. Le multiplexeur 76 a pour fonction de prendre en compte le contenu du registre 77, 78, correspondant au port 51, 54, concerné par l'opération traitée. Il existe en fait autant de registres 77, 78 et le multiplexeur 76 possède autant d'entrées qu'il existe de ports 51, 54 pour communiquer avec des systèmes distants. La sortie du multiplexeur 76 est également reliée à une première entrée d'un comparateur 79. Le comparateur 79 possède une deuxième entrée reliée à une sortie d'un multiplexeur 80.

Le multiplexeur 80 possède une première entrée reliée à la sortie d'un registre 81 et une deuxième entrée reliée à la sortie d'un registre 82. Le registre 81 possède une entrée reliée à une sixième sortie du circuit 62 et le registre 82 possède une entrée reliée à une septième sortie du circuit 62. Chaque registre 81, 82, est affecté aux opérations concernant les données échangées respectivement avec chacun des ports 51, 54, du circuit 42. Le multiplexeur 80 a pour fonction de prendre en compte le contenu du registre 81, 82, correspondant au port 51, 54, concerné par l'opération traitée. Il existe en fait autant de registres 81, 82 et le multiplexeur 80 possède autant d'entrées qu'il existe de ports 51, 54 pour communiquer avec des systèmes distants.

Le comparateur 79 génère un signal hit, fonction du résultat de la comparaison des sorties de chacun des multiplexeurs 76 et 80. Il génère également un indicateur, codé par exemple sur deux bits. L'indicateur est rangé dans le registre 83 pour signifier si les contenus du registre 77 et du registre 81 sont égaux ou différents, ou rangé dans le registre 84 pour signifier si les contenus des registres 78 et 82 sont égaux ou différents. Il existe en fait autant de registres 83, 84, que de registres 77, 78.

Les registres 75, 77, 78, 81 et 82 sont de dimension égale à la largeur du chemin de données, c'est à dire 2^{m} multiplets.

L'invalidation en écriture d'un sous bloc dans la pile 64 par le circuit 72 a pour effet d'écrire ce sous bloc dans le registre 77, 78, correspondant au port 51, 54, pour lequel s'effectue l'opération.

Une écriture registre W2^{m}B est destinée à écrire le contenu d'un sous bloc en provenance d'un système distant, dans le registre 81 ou dans le registre 82 suivant le port 51, 54, en communication avec ledit système distant. Un message de requête en écriture registre W2^{m}B est par exemple constitué de deux sous blocs. Un premier sous bloc constitue l'entête du message et contient entre autre un code indiquant qu'il s'agit d'une requête en écriture registre et le nom du système distant à l'origine du message. Un deuxième sous bloc contient les données à écrire dans le registre 81, 82.

Le message de requête en écriture registre arrive du système distant sur la première entrée du multiplexeur 61 via le bus L2CB. A partir de l'entête du message, le circuit 62 aiguille le premier sous bloc vers sa cinquième sortie à destination du registre 75. Le contenu du registre 75 est renvoyé sur le bus C2LB au moyen du multiplexeur 68 et du registre 71 pour indiquer au système distant que l'écriture a été prise en compte. Le circuit 62 aiguille ensuite le deuxième sous bloc vers sa sixième ou sa septième sortie à destination du registre 81 ou du registre 82 en fonction du port 51, 53, en communication avec le système distant. Le contenu du registre 81, 82, constitue une ancienne valeur de registre sur lequel effectuer une opération atomique dans l'unité de mémoire étendue EMU par un système distant 1, 2 telle que connue du dit système distant.

Une écriture partielle conditionnelle CPW2^{n+m}B est une opération semblable à une opération d'écriture partielle PW2^{n+m}B, soumise cependant à une condition logique dont un exemple est donné à présent.

Un message de requête en écriture partielle est généralement constitué d'un ou plusieurs sous blocs contenant l'entête du message suivi de sous blocs de données envoyés par un système distant 1, 2, sur un port 51, 54. Le premier sous bloc du message arrive sur la première entrée du multiplexeur 61 par le bus L2CB, sur un premier cycle d'horloge. Sur un deuxième cycle d'horloge, le premier sous bloc est transféré dans le registre 60. La première entrée du multiplexeur 61 est alors disponible pour recevoir le sous bloc suivant du bus L2CB. L'entête du message contient entre autres, un code indiquant qu'il s'agit d'une écriture partielle conditionnelle PW2^{n+m}B, une adresse du bloc sur lequel s'effectue l'écriture partielle dans l'unité de mémoire étendue EMU et l'emplacement d'un sous bloc à l'intérieur du bloc, codé sur n bits. Le contenu du sous bloc, ainsi repéré à l'intérieur du bloc, constitue une nouvelle valeur de registre sur lequel effectuer une opération atomique dans l'unité de mémoire étendue EMU par un système distant 1, 2. En liaison avec le séquenceur 73, le circuit de logique combinatoire 62 interprète le sous bloc comme étant le dernier sous bloc d'écriture partielle, aiguille les 2n bits codant les emplacements du premier et du dernier sous bloc vers le registre 66 et aiguille la dite adresse du bloc vers le registre 65. Le circuit de logique combinatoire 62 aiguille ensuite le sous bloc à écrire vers la pile 64 via la première entrée du multiplexeur 67 en initialisant le pointeur d'entrée 69 sur l'emplacement du sous bloc à l'intérieur du bloc. Ensuite, le circuit de logique combinatoire 63, déclenché par le séquenceur 73, élabore une requête en lecture R2^{n+m}B à partir du contenu du registre 65 qu'il transmet au registre 60 via la deuxième entrée du multiplexeur 61. Le circuit de logique combinatoire 62 aiguille alors le message de requête en lecture sur le bus C2MB à destination de l'unité de mémoire étendue EMU. Le pointeur d'entrée 69 est ré initialisé pour pointer sur la première entrée de la pile 64. Le bloc de donnée du message de réponse à la requête en lecture reçu de l'unité de mémoire étendue EMU par le bus M2CB arrive sur la deuxième entrée du multiplexeur 67 pour être transféré sous bloc par sous bloc dans la pile 64. Le pointeur d'entrée 69 s'incrémente à chaque arrivée d'un nouveau sous bloc jusqu'à l'écriture du bloc complet dans la pile 64.

Cependant, le circuit câblé de logique combinatoire 72, tel que représenté figure 5 invalide l'écriture des registres de la pile 64 dans lesquels avaient été écrits les sous blocs de l'écriture partielle, en aiguillant l'écriture de ces sous blocs, à leur réception sur la deuxième entrée du multiplexeur 67, vers le registre 77, 78 correspondant au port 51, 54, dont vient la requête en écriture partielle.

Dans le cas d'une écriture partielle, telle que celle décrite à l'aide de la figure 4, les écritures successives de plusieurs sous blocs dans le registre 77, 78 viennent simplement effacer le contenu précédent sans nuire à une écriture partielle non conditionnelle qui n'utilise pas de registre 77, 78. On remarque avantageusement que l'architecture de la figure 5 permet de faire les opérations précédemment décrites en référence à la figure 4.

Dans le cas d'une écriture partielle conditionnelle, à laquelle nous nous intéressons plus particulièrement ici, le sous bloc réceptionné sur la deuxième entrée du multiplexeur 67, invalidé en écriture dans la pile 64, est écrit dans le registre 78, 79, pour constituer une valeur courante de registre sur lequel effectuer une opération atomique dans l'unité de mémoire étendue EMU par un système distant 1, 2.

L'écriture du bloc reçu dans le message de réponse n'est effectif que pour les sous blocs autres que celui de l'écriture partielle conditionnelle. La pile 64 contient ainsi un bloc de l'unité de mémoire étendue EMU dans lequel le sous bloc correspondant à la valeur courante de registre de l'unité de mémoire étendue EMU est remplacé par le sous bloc correspondant à la nouvelle valeur de registre de l'unité de mémoire étendue EMU, telle que reçue du système distant 1, 2.

Le multiplexeur 76 aiguille la valeur courante du registre 77 pour une opération concernant le port 51, ou la valeur courante du registre 78 pour une opération concernant le port 54, vers la première entrée du comparateur 79. Le multiplexeur 80 aiguille l'ancienne valeur du registre 81 pour une opération concernant le port 51, ou l'ancienne valeur du registre 82 pour une opération concernant le port 54, vers la deuxième entrée du comparateur 79. Le résultat de la comparaison est codé, par exemple sur deux bits, dans un signal hit rangé dans le registre 83, 84, correspondant au registre 77, respectivement 78 aiguillé par le multiplexeur 76. Le signal hit est également transmis au circuit de logique combinatoire 63 qui réalise une condition sur l'écriture partielle de la façon expliquée à présent.

Si le signal hit indique que la valeur courante est égale à l'ancienne valeur, en liaison avec le séquenceur 73, le circuit de logique combinatoire 63 élabore une entête de requête en écriture W2^{n+m}B à partir du contenu du registre 65 qu'il charge dans le registre 60 via la deuxième entrée du multiplexeur 61. Le séquenceur 73 transfert ensuite le contenu de la pile 64, sous bloc par sous bloc au moyen du pointeur de sortie 70 incrémenté à partir du premier registre de la pile 64, vers le registre 60 via la troisième entrée du multiplexeur 61. Le circuit de logique combinatoire 62 transfert ainsi sur le bus C2MB un message de requête en écriture W2^{n+m}B constitué de l'entête élaborée par le circuit 63, suivie du bloc contenu dans la pile 64, à destination de l'unité de mémoire étendue EMU. Ainsi, le bloc écrit dans l'unité de mémoire étendue EMU est inchangé, à l'exception du sous bloc correspondant au registre sur lequel s'effectue une opération atomique, dont la valeur courante est remplacée par la nouvelle valeur. Après écriture du bloc dans l'unité de mémoire étendue EMU, l'unité de mémoire étendue EMU envoie un message de réponse sur le bus M2CB qui arrive sur la première entrée du multiplexeur 68 pour être transféré, via le registre 71, sur le bus C2LB. Le message de réponse est généralement constitué d'un ou plusieurs sous blocs contenant un acquittement d'écriture, qui passent à chaque cycle d'horloge du bus M2CB sur l'entrée du registre 71, et de la sortie du registre 71 sur le bus C2LB au cycle suivant. En recevant cet acquittement, le système distant est informé que sa demande d'écriture partielle a été correctement effectuée.

Si le signal hit indique que la valeur courante est différente de l'ancienne valeur, en liaison avec le séquenceur 73, le circuit de logique combinatoire 63 n'élabore pas d'en-tête de requête en écriture W2^{n+m}B à partir du contenu du registre 65. Le séquenceur 73 ne transfert pas le contenu de la pile 64 vers le registre 60 via la troisième entrée du multiplexeur 61. Par contre, le circuit de logique combinatoire 63 élabore un message de non acquittement à partir du contenu du registre 65 qu'il envoie par sa deuxième sortie dans le registre 71 via la quatrième entrée du multiplexeur 68. En recevant ce message de non acquittement, le système distant est informé que sa demande d'écriture partielle n'a pas été effectuée. Le système distant élabore alors une requête de lecture registre R2^{m}B qu'il transmet sur la première entrée du multiplexeur 61 via le bus L2CB.

Une opération de lecture registre R2^{m}B s'effectue de la façon suivante. Un message de requête en lecture envoyé par un système distant 1, 2, arrive sur la première entrée du multiplexeur 61 par le bus L2CB, sur un premier cycle d'horloge. Sur un deuxième cycle d'horloge, le message de requête en lecture est transféré dans le registre 60. Si le message de requête en lecture est codé sur un seul sous bloc, la première entrée du multiplexeur 61 est alors disponible pour recevoir un autre message du bus L2CB. Sur un troisième cycle d'horloge, le message de requête en lecture est transféré dans le registre 75 au moyen du circuit de logique combinatoire 62 qui le transforme en entête de réponse, à destination du registre 71 via la deuxième entrée du multiplexeur 68. Le message de réponse véhicule aussi le résultat de la comparaison. Le séquenceur 73 aiguille ensuite la sortie du multiplexeur 76 vers la troisième entrée du multiplexeur 68 de façon à transmettre le contenu du registre 77, 78, à la suite du contenu du registre 75, sur le bus C2LB. Ceci permet au système distant de prendre connaissance de la valeur courante du registre sur lequel effectuer une opération atomique.

Le dispositif présenté figure 5 permet à un système distant 1, 2, d'effectuer une opération atomique sur une unité de mémoire étendue EMU.

Par exemple, une opération atomique de type "Compare et Remplace" (Compare and Swap en Anglais) consiste à remplacer la valeur courante d'un registre OPA de l'unité de mémoire étendue EMU par une nouvelle valeur donnée par le système distant, à condition que la valeur courante de ce registre soit égale à son ancienne valeur telle que connue du système distant au moment où celui-ci déclenche ladite opération atomique.

L'opération atomique de type "Compare et Remplace" dans un registre OPA de l'unité de mémoire étendue EMU, est commandée par le système distant 1, 2 en deux étapes, suivies d'une troisième étape en cas d'échec.

Une première étape consiste à charger dans un registre 81, 82, situé dans le cabinet 3 une ancienne valeur connue du système distant, comme étant l'ancienne valeur du registre OPA avant cette première étape.

Une deuxième étape consiste à comparer dans le cabinet 3, le contenu du registre 81, 82 à une valeur courante contenue dans le registre OPA au moment de cette deuxième étape et à remplacer le contenu du registre OPA par une nouvelle valeur donnée par le système distant 1, 2, si et seulement si les contenus du registre 81, 82 et du registre OPA sont égaux.

Une troisième étape effectuée si les contenus du registre 81, 82 et du registre OPA sont différents, consiste à prendre comme ancienne valeur dans le système distant 1, 2, la valeur courante contenue dans le registre OPA.

Par exemple encore, une opération atomique de type "Lit et Efface" (Read and Clear en Anglais) consiste à lire la valeur courante d'un registre OPA de l'unité de mémoire étendue EMU par le système distant et à effacer cette valeur. Effacer la valeur contenue dans le registre OPA revient à y mettre une valeur nulle. Si la valeur du registre OPA avait déjà été mise à zéro par un autre système, l'opération décrite ne modifie pas le contenu du registre OPA qui reste à zéro. Cependant, la lecture du registre OPA informe le système distant qu'une opération "Lit et Efface" a déjà été effectuée par un autre système et s'interprète comme un échec. Le système distant est libre de refaire une tentative d'exécution de l'opération atomique à une date ultérieure.

Le succès de l'opération atomique de type "Lit et Efface" correspond à la lecture d'une valeur non nulle du registre OPA. Le système distant ayant effectué l'opération avec succès réécrira la valeur lue ou une autre valeur non nulle à une date ultérieure pour permettre le succès d'une nouvelle opération atomique de même type sur le registre OPA.

L'opération atomique de type "Lit et Efface" dans un registre OPA de l'unité de mémoire étendue EMU, est commandée par le système distant 1, 2 en deux étapes, suivies d'une troisième étape quelque soit le cas d'échec ou de réussite.

Une première étape consiste à charger dans un registre 81, 82, situé dans le cabinet 3 une valeur connue du système distant, systématiquement à zéro dans cette première étape.

Une deuxième étape consiste à comparer dans le cabinet 3, le contenu du registre 81, 82 à une valeur courante contenue dans le registre OPA au moment de cette deuxième étape et à remplacer la dite valeur courante du registre OPA par une nouvelle valeur donnée nulle par le système distant 1, 2, que les contenus du registre 81, 82 et du registre OPA soient égaux ou différents.

Une troisième étape consiste à prendre comme valeur connue dans le système distant 1, 2, la dite valeur courante du registre OPA, telle que définie dans la deuxième étape.

Par exemple encore, une opération atomique de type "Teste et Positionne" (Test and Set en Anglais) consiste à lire la valeur courante d'un registre OPA de l'unité de mémoire étendue EMU par le système distant et à positionner la valeur contenue dans le registre OPA. Positionner la valeur contenue dans le registre OPA consiste à y écrire une valeur constante. Si la valeur du registre OPA avait déjà été positionnée par un autre système, l'opération décrite ne modifie pas le contenu du registre OPA qui conserve la valeur constante. Cependant, la lecture du registre OPA informe le système distant qu'une opération "Teste et Positionne" a déjà été effectuée par un autre système et s'interprète comme un échec. Le système distant est libre de refaire une tentative d'exécution de l'opération atomique à une date ultérieure.

Le succès de l'opération atomique de type "Teste et Positionne" correspond à la lecture d'une valeur du registre OPA différente de la constante. Le système distant ayant effectué l'opération avec succès réécrira la valeur lue ou une autre valeur différente de la constante à une date ultérieure pour permettre le succès d'une nouvelle opération atomique de même type sur le registre OPA.

L'opération atomique de type "Lit et Efface" dans un registre OPA de l'unité de mémoire étendue EMU, est commandée par le système distant 1, 2 en deux étapes, suivies d'une troisième étape en cas d'échec.

Une première étape consiste à charger dans un registre 81, 82, situé dans le cabinet 3 une valeur connue du système distant, systématiquement égale à une constante quelque soit le système distant.

Une deuxième étape consiste à comparer dans le cabinet 3, le contenu du registre 81, 82 à une valeur courante contenue dans le registre OPA au moment de cette deuxième étape et à remplacer la dite valeur courante du registre OPA par une nouvelle valeur donnée constante par le système distant 1, 2, que les contenus du registre 81, 82 et du registre OPA soient égaux ou différents.

Une troisième étape consiste à prendre comme valeur connue dans le système distant 1, 2, la dite valeur courante du registre OPA, telle que définie dans la deuxième étape.

Un avantage d'effectuer cette opération atomique dans le cabinet 3 est de pouvoir réduire considérablement la section critique en la limitant à la seule exécution de la deuxième étape. La section critique est la part de processus dans laquelle toute modification du contenu du registre OPA, autre que celle demandée par l'opération atomique, est interdite. Pour ne pas perturber les performances du système, particulièrement en rapidité, la durée de la section critique doit donc être la plus courte possible. Or, les temps de communication entre le système distant 1, 2, et le cabinet 3 contenant l'unité de mémoire étendue EMU sont loin d'être négligeables. La première étape consistant à transférer l'ancienne valeur du registre OPA, telle que connue du système distant dans le registre 81, 82, localisé dans le cabinet 3, peut se faire hors section critique. De même, la troisième étape qui informe le système distant de la valeur courante du registre OPA peut se faire hors section critique. En restreignant la section critique à la seule deuxième étape, effectuée localement dans le cabinet 3, sa durée n'est pas soumise aux temps de communication.

Un autre avantage d'effectuer cette opération atomique dans le cabinet 3 est de pouvoir insensibiliser la section critique aux erreurs de communication entre le système distant et le cabinet 3 contenant l'unité de mémoire étendue EMU. En effet, si une erreur de communication se produit pendant la première ou la troisième étape, il suffit de recommencer ces étapes qui en elles-mêmes ne modifient pas le contenu du registre OPA. La deuxième étape, quant à elle, ne concernant que des éléments locaux du cabinet 3, est insensible aux erreurs de communication.

Une valeur courante du registre OPA, différente de son ancienne valeur telle que connue du système distant conduit à un échec de l'opération atomique commandée par ce système distant car cela signifie que le contenu du registre OPA a varié au moment de la commande de ladite opération atomique et une modification de son contenu par le système distant risque de conduire à une incohérence des données partagées par plusieurs systèmes. Le système distant peut alors tenir compte de la modification intervenue dans le registre OPA pour commander à nouveau une opération atomique avec, comme ancienne valeur, la valeur courante donnée par la troisième étape. Le système distant pourra recommencer sa commande autant de fois que nécessaire pour réussir.

Si le cabinet 3 est doté d'une unité centrale, il est envisageable de placer le registre 81, 82 directement dans l'unité de mémoire étendue EMU et de traiter les trois étapes décrites ci-dessus directement dans cette unité centrale.

Cependant, de façon avantageuse, on peut préférer que les systèmes distants accèdent directement à l'unité de mémoire étendue EMU par lecture et écriture de bloc de données de 2^{n+m} multiplets. On améliore ainsi la rapidité des échanges entre l'unité de mémoire étendue EMU et les systèmes distants.

On dispose dans les contrôleurs de mémoire étendue EMC 7, 16, 17 du cabinet 3 autant de registres 81, 82, et autant de registres 77, 78, qu'il existe de systèmes distants en communication avec un contrôleur de mémoire étendue EMC au moyen de la liaison EML 6, 10. Une paire de registres 81, 77 ou 82, 78, est particulièrement affectée à un système distant. Cette disposition est par exemple celle présentée figure 5, dans le circuit CM 50.

A la première étape, une opération d'écriture registre W2^{m}B, commandée par le système distant charge la valeur connue associée au registre OPA, dans le registre 81, 82.

A la deuxième étape, une opération d'écriture partielle conditionnelle CPW2^{n+m}B compare, dans le contrôleur de mémoire étendue EMC 7, 16, 17 du cabinet 3, le contenu du registre 81, 82 à une valeur courante du registre OPA, chargée dans un registre 77, 78 et remplace le contenu du registre OPA par une nouvelle valeur donnée par le système distant 1, 2, si et seulement si les contenus du registre 81, 82 et du registre 77, 78 sont égaux, au moyen d'un mécanisme d'écriture partielle dans le bloc de l'unité de mémoire étendue EMU contenant le registre OPA.

A la troisième étape, une opération de lecture registre R2^{m}B, commandée par le système distant, lui transmet le contenu du registre 77, 78. Cette troisième étape est fonction du résultat des deux étapes précédentes, c'est à dire qu'elle n'est pas absolument nécessaire. La troisième étape sera par exemple effectuée suite à un échec de la deuxième étape, en cas de défaut de liaison dans la deuxième étape ou en cas de perturbation pendant l'écriture partielle conditionnelle de la deuxième étape.

Une opération d'écriture partielle dans un bloc de mémoire est constituée d'une lecture de ce bloc de mémoire, d'un remplacement de sous bloc suivi d'une réécriture du bloc en mémoire, et ceci de façon indivisible. C'est à dire qu'aucune opération ne peut se faire en mémoire entre la lecture et la réécriture du bloc modifié en mémoire.

Si un défaut de liaison se produit sur l'opération d'écriture registre W2^{m}B de la première étape, ceci est sans conséquence sur la valeur du registre OPA qui reste inchangé. L'opération peut être recommencée. De même, si un défaut de liaison se produit sur l'opération de lecture registre R2^{m}B de la troisième étape, ceci est sans conséquence sur le résultat de l'opération atomique. Il est toujours possible de recommencer l'opération de lecture registre R2^{m}B pour connaître ce résultat.

## Revendications

1. Dispositif de contrôleur mémoire pour la mise en oeuvre d'une opération atomique commandée par un système informatique (1,2) sur un premier registre (OPA) situé dans une unité de mémoire distante (8), qui est constituée de deux étapes suivies d'une troisième étape en fonction du résultat des deux premières étapes,
- la première étape consistant à charger dans un deuxième registre (81,82), à proximité du dit premier registre (OPA), une valeur connue du dit système informatique (1,2);
- la deuxième étape consistant à comparer, à proximité du dit premier registre (OPA), la valeur connue du deuxième registre (81,82) à une valeur courante du dit premier registre (OPA) et à remplacer, suivant le résultat de la comparaison, la dite valeur courante par une nouvelle valeur, communiquée par le système informatique (1,2);
- la troisième étape consistant à communiquer au système informatique (1,2) la dite valeur courante du dit premier registre, **caractérisé en ce que** le deuxième registre (81,82) étant situé dans ledit contrôleur mémoire (7,16,17) à proximité de l'unité de mémoire distante (8), ledit contrôleur mémoire (7,16,17) comprenant un troisième registre (77,78) dans lequel est écrite la valeur courante du premier registre (OPA) suite à une commande d'écriture partielle du bloc de l'unité mémoire contenant ledit premier registre (OPA) pour écrire la nouvelle valeur dans ledit premier registre (OPA).

2. Dispositif de contrôleur mémoire pour la mise en oeuvre d'une opération atomique selon la revendication 1, **caractérisé en ce que** la valeur courante est remplacée par la nouvelle valeur si et seulement si le résultat de la comparaison indique que la valeur connue est égale à la valeur courante.

3. Dispositif de contrôleur mémoire pour la mise en oeuvre d'une opération atomique selon la revendication 1, **caractérisé en ce que** la valeur courante est remplacée par la nouvelle valeur quel que soit le résultat de la comparaison et que les deux premières étapes sont toujours suivies de la troisième étape.

4. Dispositif de contrôleur mémoire pour la mise en oeuvre d'une opération atomique selon les revendications 1 à 3, comprenant une pile (64) dont au moins une entrée est reliée à un bus (M2CB) de réception de données en provenance d'une unité mémoire (8) et à un bus (L2CB) de réception de données en provenance d'un système informatique (1,2) distant au moyen d'un premier multiplexeur (67) et dont au moins une sortie est reliée à un bus (C2MB) d'émission de données vers ladite unité mémoire (8) au moyen d'un premier circuit (62) de logique combinatoire, **caractérisé en ce qu'**il comprend:
- un registre (77,78) dont l'entrée est reliée au bus (M2CB) de réception de données en provenance de l'unité mémoire (8) et dont la sortie est reliée à un bus d'émission (C2LB) de données vers le système informatique (1,2) distant au moyen d'un deuxième multiplexeur (68);
- un circuit de logique combinatoire (72) pour invalider l'écriture d'au moins une entrée de la pile (64) et pour aiguiller les données destinées à cette entrée vers ledit registre (77,78);
- un registre (81,82) dont une entrée est reliée au bus (L2CB);
- un comparateur (79) dont une entrée est reliée à une sortie du registre (77,78) et une autre entrée est reliée à une sortie du registre (81,82), la sortie de ce comparateur commandant au moins une sortie de la pile (64).

5. Dispositif selon la revendication 4, **caractérisé en ce qu'**il comprend un dispositif de verrouillage 74 respectant une priorité d'accès de type circulaire à l'unité mémoire (8) par plusieurs contrôleurs mémoire (7, 16, 17).

6. Procédé de communication entre plusieurs systèmes informatiques distants (1,2) au moyen d'une unité mémoire (8) partagée entre ces systèmes distants, chacun de ces systèmes informatiques (1,2) ayant la possibilité de se réserver une exclusivité momentanée d'accès à l'unité mémoire (8) au moyen d'une opération atomique, **caractérisé en ce que** ladite opération atomique consiste à remplacer une valeur courante d'un premier registre (OPA) dans l'unité mémoire (8) par une nouvelle valeur communiquée par le système informatique (1,2) distant de l'unité mémoire, à un contrôleur mémoire (7,16,17) pour exécuter l'opération atomique à proximité de l'unité mémoire (8), une écriture de la valeur courante du premier registre (OPA) étant réalisée dans un registre (77, 78) du contrôleur mémoire (7,16,17) suite à une commande d'écriture partielle du bloc de l'unité mémoire contenant ledit premier registre (OPA).

7. Opération atomique selon la revendication 2, **caractérisée en ce qu'**une perturbation intervenue avant exécution de la deuxième étape provoque une réitération à la première étape et qu'une perturbation intervenue à partir de l'exécution de la deuxième étape déclenche une exécution de la troisième étape.

8. Dispositif selon la revendication 5, **caractérisé en ce qu'**il comprend un nombre de registres (77), (78) supérieur à un, et un nombre égal de registres (81), (82), chaque paire de registres (81,77), (82,78) étant particulièrement affectée à un système distant (1), (2) en communication avec ledit dispositif pour effectuer une opération atomique, la section critique étant limitée au temps local de l'écriture partielle.

## Patentansprüche

1. Speichersteuervorrichtung für die Ausführung einer durch ein Datenverarbeitungssystem (1, 2) befohlenen atomaren Operation an einem ersten Register (OPA), das sich in einer entfernten Speichereinheit (8) befindet, wobei die atomare Operation aus zwei Schritten gebildet ist, denen in Abhängigkeit vom Ergebnis der beiden ersten Schritte ein dritter Schritt folgt,
- wobei der erste Schritt darin besteht, in ein zweites Register (81, 82) in der Nähe des ersten Registers (OPA) einen bekannten Wert des Datenverarbeitungssystems (1, 2) zu laden;
- wobei der zweite Schritt darin besteht, in der Nähe des ersten Registers (OPA) den bekannten Wert des zweiten Registers (81, 82) mit einem momentanen Wert des ersten Registers (OPA) zu vergleichen und je nach Ergebnis des Vergleichs den momentanen Wert durch einen neuen Wert zu ersetzen, der vom Datenverarbeitungssystem (1, 2) übermittelt wird;
- wobei der dritte Schritt darin besteht, an das Datenverarbeitungssystem (1, 2) den momentanen Wert des ersten Registers zu übermitteln,
**dadurch gekennzeichnet, daß**
das zweite Register (81, 82) sich in der Speichersteuereinrichtung (7, 16, 17) in der Nähe der entfernten Speichereinheit (8) befindet, wobei die Speichersteuereinrichtung (7, 16, 17) ein drittes Register (77, 78) umfaßt, in das der momentane Wert des ersten Registers (OPA) infolge eines Partialschreibbefehls des das erste Register (OPA) enthaltenden Blocks der Speichereinheit geschrieben wird, um den neuen Wert in das erste Register (OPA) zu schreiben.

2. Speichersteuervorrichtung für die Ausführung einer atomaren Operation nach Anspruch 1, **dadurch gekennzeichnet, daß** der momentane Wert dann und nur dann durch den neuen Wert ersetzt wird, wenn das Ergebnis des Vergleichs anzeigt, daß der bekannte Wert gleich dem momentanen Wert ist.

3. Speichersteuervorrichtung für die Ausführung einer atomaren Operation nach Anspruch 1, **dadurch gekennzeichnet, daß** der momentane Wert durch den neuen Wert unabhängig vom Ergebnis des Vergleichs ersetzt wird und daß den zwei ersten Schritten stets der dritte Schritt folgt.

4. Speichersteuervorrichtung für die Ausführung einer atomaren Operation nach den Ansprüchen 1 bis 3, die einen Stapelspeicher (64) umfaßt, wovon wenigstens ein Eingang mit einem Bus (M2CB) für den Empfang von Daten, die von einer Speichereinheit (8) stammen, und mit einem Bus (L2CB) für den Empfang von Daten, die von einem entfernten Datenverarbeitungssystem (1, 2) stammen, mittels eines ersten Multiplexers (67) verbunden ist und wovon wenigstens ein Ausgang mit einem Bus (C2MB) zum Senden von Daten zu der Speichereinheit (8) mittels einer ersten kombinatorischen Logikschaltung (62) verbunden ist, **dadurch gekennzeichnet, daß** sie umfaßt:
- ein Register (77, 78), wovon ein Eingang mit dem Bus (M2CB) für den Empfang von Daten, die von der Speichereinheit (8) stammen, verbunden ist und wovon ein Ausgang mit einem Bus (C2LB) zum Senden von Daten zu dem entfernten Datenverarbeitungssystem (1, 2) über einen zweiten Multiplexer (68) verbunden ist;
- eine kombinatorische Logikschaltung (72), die das Schreiben wenigstens eines Eingangs des Stapelspeichers (64) für ungültig erklärt und die für diesen Eingang bestimmten Daten zu dem Register (77, 78) lenkt;
- ein Register (81, 82) wovon ein Eingang mit dem Bus (L2CB) verbunden ist;
- einen Komparator (79), wovon ein Eingang mit einem Ausgang des Registers (77, 78) verbunden ist und wovon ein anderer Eingang mit einem Ausgang des Registers (81, 82) verbunden ist, wobei der Ausgang dieses Komparators wenigstens den Ausgang des Stapelspeichers (64) steuert.

5. Vorrichtung nach Anspruch 4, **dadurch gekennzeichnet, daß** sie eine Verriegelungsvorrichtung (74) umfaßt, die einer zirkulären Priorität des Zugriffs auf die Speichereinheit (8) durch mehrere Speichersteuervorrichtungen (7, 16, 17) gehorcht.

6. Verfahren zur Kommunikation zwischen mehreren entfernten Datenverarbeitungssystemen (1, 2) mittels einer von diesen entfernten Systemen gemeinsam genutzten Speichereinheit (8), wobei jedes dieser Datenverarbeitungssysteme (1, 2) die Möglichkeit hat, sich mittels einer atomaren Operation einen momentanen exklusiven Zugriff auf die Speichereinheit (8) zu sichern, **dadurch gekennzeichnet, daß** die atomare Operation darin besteht, einen momentanen Wert eines ersten Registers (OPA) in der Speichereinheit (8) durch einen neuen Wert zu ersetzen, der von dem von der Speichereinheit entfernten Datenverarbeitungssystem (1, 2) an eine Speichersteuervorrichtung (7, 16, 17) übermittelt wird, um die atomare Operation in der Nähe der Speichereinheit (8) auszuführen, wobei ein Schreiben des momentanen Werts des ersten Registers (OPA) in ein Register (77, 78) der Speichersteuervorrichtung (7, 16, 17) infolge eines Partialschreibbefehls des das erste Register (OPA) enthaltenden Blocks der Speichereinheit ausgeführt wird.

7. Atomare Operation nach Anspruch 2, **dadurch gekennzeichnet, daß** eine Störung, die vor der Ausführung des zweiten Schrittes auftritt, eine Reiteration des ersten Schrittes hervorruft und eine Störung, die nach der Ausführung des zweiten Schrittes auftritt, eine Ausführung des dritten Schrittes auslöst.

8. Vorrichtung nach Anspruch 5, **dadurch gekennzeichnet, daß** sie eine Anzahl von Registern (77), (78) größer als eins und eine gleiche Anzahl von Registern (81), (82) umfaßt, wobei jedes Paar von Registern (81, 77), (82, 78) insbesondere einem entfernten System (1), (2) zugewiesen ist, das mit der Vorrichtung in Verbindung steht, um eine atomare Operation auszuführen, wobei der kritische Abschnitt auf die lokale Zeit des partiellen Schreibens begrenzt ist.

## Claims

1. Memory controller device for performing an atomic operation controlled by a computer system (1, 2) on a first register (OPA) located in a remote memory unit (8), which is constituted by two steps followed by a third step as a function of the result of the first two steps,
the first step consisting in loading into a second register (81, 82), in the vicinity of said first register (OPA), a value known to said computer system (1, 2);
the second step consisting in comparing, in the vicinity of said first register (OPA), the known value of the second register (81, 82) with a current value of said first register (OPA) and, depending on the result of the comparison, in replacing said current value with a new value, notified by the computer system (1, 2);
the third step consisting in communicating to the computer system (1, 2) said current value of said first register, **characterised in that**
the second register (81, 82) being located in said memory controller (7, 16, 17) in the vicinity of the remote memory unit (8), said memory controller (7, 16, 17) comprising a third register (77, 78) to which the current value of the first register (OPA) is written following a command to partly write the block of the memory unit containing said first register (OPA) in order to write the new value to said first register (OPA).

2. Memory controller device for performing an atomic operation according to Claim 1, **characterised in that** the current value is replaced by the new value if and only if the result of the comparison indicates that the known value is equal to the current value.

3. Memory controller device for performing an atomic operation according to Claim 1, **characterised in that** the current value is replaced by the new value whatever the result of the comparison and that the first two steps are always followed by the third step.

4. Memory controller device for performing an atomic operation according to Claims 1 to 3, comprising a stack (64), at least one input of which is connected to a bus (M2CB) for receiving data coming from a memory unit (8) and to a bus (L2CB) for receiving data coming from a remote computer system (1, 2) by means of a first multiplexer (67) and at least one output of which is connected to a bus (C2MB) for sending data to said memory unit (8) by means of a first combinational logic circuit (62), **characterised in that** it comprises:
a register (77, 78), the input of which is connected to the bus (M2CB) for receiving data coming from the memory unit (8) and the output of which is connected to a bus (C2LB) for sending data to the remote computer system (1, 2) by means of a second multiplexer (68);
a combinational logic circuit (72) for disabling the writing of at least one input of the stack (64) and for routing data intended for said input to said register (77, 78);
a register (81, 82), one input of which is connected to the bus (L2CB);
a comparator (79), one input of which is connected to an output of the register (77, 78), and another input of which is connected to an output of the register (81, 82), the output of this comparator controlling at least one output of the stack (64).

5. Device according to Claim 4, **characterised in that** it comprises a locking device 74 adhering to a circular-type priority for access to the memory unit (8) by several memory controllers (7, 16, 17).

6. Method of communication between several remote computer systems (1, 2) by means of a memory unit (8) shared among these remote systems, each of these computer systems (1, 2) having the capability of reserving for itself temporary exclusive access to the memory unit (8) by means of an atomic operation, **characterised in that** said atomic operation consists in replacing a current value of a first register (OPA) in the memory unit (8) with a new value communicated by the computer system (1, 2) remote from the memory unit, to a memory controller (7, 16, 17) in order to execute the atomic operation in the vicinity of the memory unit (8), the current value of the first register (OPA) being written to a register (77, 78) of the memory controller (7, 16, 17) following a command to partly write the block of the memory unit containing said first register (OPA).

7. Atomic operation according to Claim 2, **characterised in that** interference occurring before the execution of the second step causes reiteration to the first step and that interference occurring after the execution of the second step triggers performance of the third step.

8. Device according to Claim 5, **characterised in that** it comprises a number of registers (77), (78) greater than one, and an equal number of registers (81), (82), each pair of registers (81, 77), (82, 78) being allocated particularly to a remote system (1), (2) in communication with said device in order to perform an atomic operation, the critical section being limited to the local partial write time.
